# EUROPÄISCHE PATENTANMELDUNG

(11) **EP 1 366 852 A2**
(43) Veröffentlichungstag der Anmeldung: **03.12.2003**
(21) Anmeldenummer: 03010091.1
(22) Anmeldetag: 03.05.2003
(51) Int. Cl.: B23Q 39/02, B23Q 37/00, B23Q 1/62, B23Q 1/48, B23B 13/00

(54) **Werkzeugmaschine mit schwenkbarer Werkstückspindel**

(30) Priorität: 29.05.2002 DE 10224347
(71) Anmelder: EMAG MASCHINENFABRIK GMBH, D-73084 Salach (DE)
(72) Erfinder: Hessbrüggen, Norbert, 73084 Salach (DE)

(57) **Zusammenfassung**

Die Erfindung betrifft eine Werkzeugmaschine, insbesondere ein Bearbeitungszentrum zur Bearbeitung von Werkstücken durch Bohren, Drehen, Fräsen und Schleifen etc. Die schwenkbare Werkstückspindel ist in einem Schlitten zwischen den Führungen in X- Richtung angeordnet und auf zwei gegenüberliegenden Seiten gelagert. Die Kombination eines besonders biegesteif ausgelegten Vertikalschlittens mit den beidseitig der Werkstückspinde geordneter. Führungen bewirkt einen besonders kurzen, symmetrischen Kraftfluss, und daraus resultierend wird eine hohe statische und dynamische Steifigkeit erreicht.

## Beschreibung

Die Erfindung betrifft eine Werkzeugmaschine, insbesondere ein Bearbeitungszentrum zur Bearbeitung von Werkstücken durch Bohren, Drehen, Fräsen und Schleifen etc.

### [Stand der Technik]

Bei einer bekannten Werkzeugmaschine dieser Art (DE 199 04 860 A1) ist die Werkstückspindel in einem Schlitten angeordnet, der horizontal in X-Richtung und vertikal in Richtung der Z-Achse verfahrbar ist. Die Werkstückspindel ist ferner um eine zur X- und Z- Achse senkrechte Achse schwenkbar. Eine unbegrenzte Schwenkmöglichkeit wird dadurch erreicht, dass die Schwenkebene während der Bearbeitung von der Bedienungsseite her gesehen vor den Führungen der X-Achse liegt. Die Werkstückspindel kann daher nur einseitig gelagert und geführt werden. Ferner ist aus der DE 42 12 175 C2 eine Werkzeugmaschine mit schwenkbarer Werkstücksoindel bekannt. Auch bei dieser Werkzeugmaschine ist die Werkstückspindel einseitig gelagert.

### [Aufgabe der Erfindung]

Ausgehend von diesem Stand der Technik liegt der Erfindung die Aufgabe zu Grunde, die Steifigkeit der Werkzeugmaschine und insbesondere die der die Werkstückspindel tragenden Elemente zu erhöhen. Diese Aufgabe wird gelöst durch eine Werkzeugmaschine nach Anspruch 1.

### [Beispiele]

Die Erfindung beruht auf der Erkenntnis, dass es für die Steifigkeit der Werkzeugmaschine vorteilhaft ist, die Werkstückspindel in einem Schlitten zwischen den Führungen in X-Richtung anzuordnen und auf zwei gegenüberliegenden Seiten schwenkbar zu lagern. Vorteilhafterweise ist die Schwenkachse an der Werkstückspindel in der Nähe des Spannmittels angebracht. Die Werkstückspindel wird von einem senkrecht beweglichen Schlitten getragen. Dieser wiederum wird von einem Kreuzschlitten aufgenommen, welcher auf im Grundgestell angeordneten Führungsbahnen eine Bewegung in horizontaler Richtung ermöglicht. Bei einer vorteilhaften Ausführung ist der senkrecht bewegliche Schlitten im wesentlichen gabelförmig ausgeführt. Zur Bearbeitung der Werkstücke sind Werkzeuge in einem Revolver und/oder an einer Motorspindel bereitgestellt. Bei einer weiteren vorteilhaften Ausführung ist eine Messvorrichtung zur Überwachung der Fertigungsqualität vorhanden. Bei einer besonders vorteilhaften Ausführung sind die Schwenklager für die Werkstückspindel beide als Festlager ausgeführt. Die Gabelarme sind auf diese Weise auch an den unteren Enden starr mit einander verbunden. Mit einer derartigen Anordnung der Werkstückspindel wird ein kurzer symmetrischer Kraftfluss erreicht, der eine wichtige Voraussetzung für hohe statische und dynamische Steifigkeit ist.

Eine beispielhafte Ausführungsform der Erfindung wird nachstehend anhand der Figuren erläutert.

Es zeigen:
- Fig. 1: einen Schnitt der erfindungsgemäßen Werkzeugmaschine
- Fig. 2: einen Querschnitt der erfindungsgemäßen Werkzeugmaschine

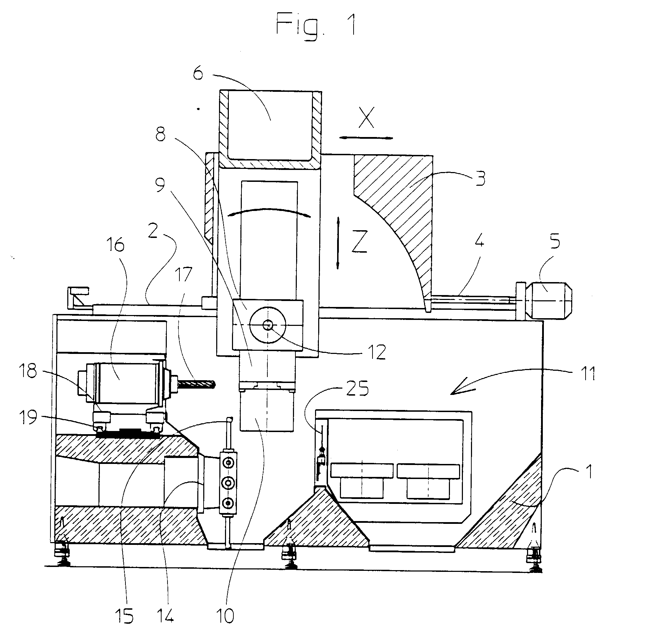

In Fig. 1 ist ein Bearbeitungszentrum im Schnitt gezeigt. Es ist ein Grundkörper 1 mit Führungsbahnen 2 dargestellt. Der Kreuzschlitten 3 ist von einem Motor 5 über eine Kugelrollspindel 4 entlang der Führungsbahn 2 in X-Richtung bewegbar. Am Kreuzschlitten befinden sich Führungsschuhe 13, in welchen der Vertikalschlitten 6 über Führungsbahnen 7 geführt ist und von einem nicht dargestellten Linearantrieb in Z-Richtung bewegbar ist. Im Vertikalschlitten 6 ist die Werkstückspindel 8 um eine Schwenkachse 12 schwenkbar gelagert. Am unteren Ende der Werkstückspindel 8 befindet sich das Futter 9, welches zum Greifen und Spannen von Werkstücken 10 geeignet ist. Für die Bearbeitung eines Werkstücks 10 sind die für Bearbeitungszentren typischen Werkzeuge zum Drehen, Fräsen, Bohren, Gewindeschneiden, Senken, Schleifen etc. vorgesehen. In der Fig. 1 sind beispielhaft ein Werkzeugrevolver 14 mit Werkzeugen 15 und eine Motorspindel 16 mit einem Werkzeug 17 dargestellt. Die Motorspindel 16 kann mittels eines Schlittens 18 auf Führungsbahnen 19 in γ-Richtung bewegt werden. Ein Bearbeitungszyklus beginnt mit der Entnahme eines Werkstücks 10 aus der Transporteinrichtung 11. Dann bewegt sich der Kreuzschlitten 3 entlang der Führungsbahn 2 (in X-Richtung) in den Wirkbereich der Bearbeitungsstation. Nach erfolgter Bearbeitung wird das Werkstück 10 wieder in der Transporteinrichtung 11 abgelegt. Eine vorteilhafte Ausführung sieht zu Überwachung der Fertigungsqualität eine Messvorrichtung 25 vor.

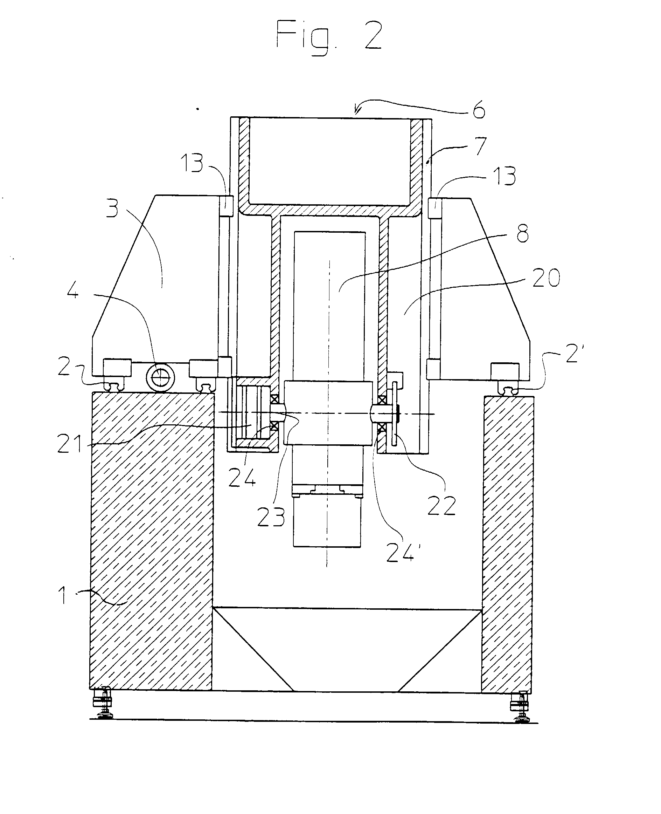

Fig. 2 zeigt den Querschnitt der erfindungsgemäßen Werkzeugmaschine. Der Vertikalschlitten 6 weist im Querschnitt eine gabelähnliche Form auf. Im unteren Teil der Gabelarme 20 befinden sich die Schwenklager 24 und 24'. Am Achszapfen 23 ist ein Schwenkmotor 21 angekuppelt. Damit kann die Werkstückspindel 8 in beliebige Schwenklagen geschwenkt werden. Zur Fixierung der Werkstückspindel 8 in den jeweiligen Schwenklagen ist eine Klemmvorrichtung 22 vorgesehen.

Bei einer besonders vorteilhaften Ausführung sind die Schwenklager 24 und 24' beide als Festlager ausgeführt. Die Gabelarme 20 sind auf diese Weise auch an den unteren Enden starr mit einander verbunden. Mit dieser Maßnahme kann ihre Durchbiegung drastisch reduziert werden. Die Kombination dieses besonders biegesteif ausgelegten Vertikalschlittens 6 mit den beidseitig der Werkstückspindel 8 angeordneten Führungen 2, 2' bewirkt einen besonders kurzen, symmetrischen Kraftfluss, und daraus resultierend wird eine hohe statische und dynamische Steifigkeit erreicht.

### [Bezugszeichenliste]

- 1: Grundkörper
- 2: 2' Führungsbahn
- 3: Kreuzschlitten
- 4: Kugelrollspindel
- 5: Motor
- 6: Vertikalschlitten
- 7: Führungsbahn
- 8: Werkstückspindel
- 9: Futter
- 10: Werkstück
- 11: Transporteinrichtung
- 12: Schwenkachse
- 13: Führungsschuh
- 14: Werkzeugrevolver
- 15: Werkzeug
- 16: Motorspindel
- 17: Werkzeug
- 18: Schlitten
- 19: Führungsbahn
- 20: Gabelarm
- 21: Schwenkmotor
- 22: Klemmvorrichtung
- 23: Achszapfen
- 24 24': Schwenklager
- 25: Messvorrichtung

## Patentansprüche

1. Werkzeugmaschine, vorzugsweise Bearbeitungszentrum, zum Bearbeiten von Werkstücken, mit einer Werkstückspindel 8, die in mindestens einer Achsrichtung verfahrbar ist und um eine Schwenkachse 12 schwenkbar ist, die Werkstücke 10 von einer Transporteinrichtung 11 abholt, sie wenigstens einer Bearbeitungsstation zur Bearbeitung zuführt, und nach erfolgter Bearbeitung wieder auf die Transporteinrichtung 11 ablegt,
**dadurch gekennzeichnet,**
**dass** die Schwenklager 24 uns 24' auf gegenüberliegenden Seiten der Werkstückspindel 8 angeordnet sind.

2. Werkzeugmaschine nach Anspruch 1,
**dadurch gekennzeichnet, dass** die Schwenkachse 12 der Werkstückspindel 8 in einem im wesentlichen gabelförmigen Schlitten 6 gelagert ist.

3. Werkzeugmaschine nach Anspruch 2,
**dadurch gekennzeichnet, dass** beide Schwenklager 24, 24' in den Gabelarmen 20 als Festlager ausgeführt sind.

4. Werkzeugmaschine nach einem der Ansprüche 1 bis 3, **dadurch gekennzeichnet, dass** auf der einen Seite der Schwenkachse 12 ein Schwenkmotor 21 und auf der gegenüberliegenden Seite eine Bremsvorrichtung 22 angeordnet sind.

5. Werkzeugmaschine nach einem der Ansprüche 1 bis 4, **dadurch gekennzeichnet**, Werkzeugmaschine nach einem der vorhergehenden Ansprüche, **dadurch gekennzeichnet, dass** zur Bearbeitung der Werkstücke 10 ein Werkzeugrevolver 14 vorgesehen ist.

6. Werkzeugmaschine nach einem der vorhergehenden Ansprüche,
**dadurch gekennzeichnet, dass** zur Bearbeitung der Werkstücke 10 eine Motorspindel 16 mit Werkzeugen 18 vorgesehen ist.

7. Werkzeugmaschine nach Anspruch 6, **dadurch gekennzeichnet, dass** die Motorspindel 6 entlang von Führungsbahnen 19 senkrecht zur X-.und Z- Richtung (in Y- Richtung) bewegbar ist.

8. Werkzeugmaschine nach einem der vorhergehenden Ansprüche,
**dadurch gekennzeichnet, dass** zur Überwachung der Fertigungsqualität eine Messvorrichtung 25 vorgesehen ist.
